# EUROPÄISCHE PATENTSCHRIFT

(11) **EP 3 305 081 B1**
(45) Veröffentlichungstag und Bekanntmachung des Hinweises auf die Patenterteilung: **10.04.2019**
(21) Anmeldenummer: 17194464.8
(22) Anmeldetag: 02.10.2017
(51) Int. Cl.: A23P 30/20, A23L 13/60, A22C 13/00

(54) **LEBENSMITTELHÜLLE UND HERSTELLUNGSVERFAHREN FÜR UMHÜLLTE LEBENSMITTEL**
FOOD CASING AND METHOD FOR PRODUCING CASED FOOD
ENVELOPPES POUR DENRÉES ALIMENTAIRES ET PROCÉDÉ DE FABRICATION DE DENRÉE ALIMENTAIRE ENVELOPPÉ

(30) Priorität: 05.10.2016 DE 102016118850
(43) Veröffentlichungstag der Anmeldung: 11.04.2018
(73) Patentinhaber: Deutsches Institut für Lebensmitteltechnik e.V., 49610 Quakenbrück (DE)
(72) Erfinder: Hukelmann, Bernhard, 49610 Quakenbrück (DE)
(74) Vertreter: Taruttis, Stefan Georg

(56) Entgegenhaltungen:
- DE-A1- 2 402 361
- DE-U- 1 951 898
- JP-U- S5 045 379
- US-A- 4 466 465

## Beschreibung

Die vorliegende Erfindung betrifft eine Lebensmittelhülle und ein Herstellungsverfahren für mit dieser Hülle eingehüllte Lebensmittel, die in die Lebensmittelhülle eingefüllte Lebensmittelmassen aufweisen, die bevorzugt beim Füllen pastös sind und in der Lebensmittelhülle schnittfest werden, z.B. durch Reifung und/oder Garung, sowie die Verwendung der Lebensmittelhülle als Hülle für Lebensmittel. Die Lebensmittelhülle weist eine Schlauchhülle auf, die durch das Füllen mit Lebensmittelmasse gespannt wird und endständig geschlossen ist. Die Lebensmittelmasse ist bevorzugt eine proteinhaltige Lebensmittelmasse, z.B. mit oder aus Wurstbrät, pflanzlichen Bestandteilen, Ei und/oder Milchprotein.

Die Lebensmittelhülle zeichnet sich dadurch aus, dass sie bei Füllung mit einer Lebensmittelmasse die Lebensmittelmasse in eine Form bringt, die sich zum Schneiden in Scheiben eignet und insbesondere das Halten an einer endständigen Querschnittsfläche des Lebensmittels mittels eines Greifers erleichtert und ein Schneiden in Scheiben mit gleichem Querschnitt mit geringen Verlusten erlaubt.

Schlauchhüllen für Lebensmittel, die bei Wurst auch als Darm bezeichnet werden, können für die erfindungsgemäße Lebensmittelhülle natürlicher Darm sein, bevorzugt synthetisch, auf Basis natürlicher Polymere, z.B. Kollagen, Cellulose, insbesondere Hautfaserhüllen , z.B. Naturin, Kutisin oder Elastin oder auf Basis von Zellulose und/oder Zellstoff, Pergamentpapier, oder Seidengerüstwursthüllen. Alternativ können Schlauchhüllen auf Basis künstlicher Polymere sein, z.B. Polyolefinen, Polyurethan, und/oder Mischungen oder aufeinanderliegende Schichten auf Basis natürlicher und synthetischer Polymere.

### Stand der Technik

Es ist bekannt, Schlauchhüllen für Lebensmittel mit pastöser Lebensmittelmasse zu füllen, z.B. mittels einer Pumpe, insbesondere einer Förderschnecke oder eines Extruders, und anschließend endständig und abschnittsweise durch aufgesetzte Klammern oder Schnur zu verschließen.

Nachteilig an gefüllten Lebensmittelhüllen, deren Enden mit einer aufgesetzten Klammer verschlossen sind, sind die zulaufenden Enden des Lebensmittels für ein anschließendes Schneiden in gleichgroße Scheiben. Für das Festhalten des Lebensmittels kann es erforderlich sein, ein zulaufendes Ende abzuschneiden, um eine ebene Fläche zum Ansetzen eines Greifers zu erzeugen.

Die DE 1951898 U beschreibt Wursthüllen, an deren inneren Enden Platten eine gerade Abschlussfläche bilden.

Die DE 2402361 A1 beschreibt zum Füllen flexibler Verpackungshüllen ein Füllrohr, das einen kleineren Außendurchmesser aufweist als der Innendurchmesser der Verpackungshülle, mit einem verschieblichen Kolben, der über das Ende des Füllrohrs ragt und zum Verschluss gegen die Öffnung des Füllrohrs gezogen werden kann.

### Aufgabe der Erfindung

Die Aufgabe der Erfindung liegt in der Bereitstellung einer alternativen Lebensmittelhülle bzw. eines alternativen, von der Lebensmittelhülle eingehüllten Lebensmittels und eines Verfahrens zur Herstellung eines von dieser Lebensmittelhülle umhüllten Lebensmittels,wobei die Lebensmittelhülle geeignet sein soll, dass sie bei Füllung mit einer Lebensmittelmasse diese Masse in eine Form bringt, die sich zum Schneiden in Scheiben mit gleicher Fläche bei geringen Verlusten eignet und/oder in eine Form, die das Halten an einer endständigen Querschnittsfläche mittels eines Greifers erleichtert.

### Beschreibung der Erfindung

Die Erfindung löst die Aufgabe mit den Merkmalen der Ansprüche, insbesondere durch eine Lebensmittelhülle, die eine Schlauchhülle und endständig daran flüssigkeitsdicht angebrachte Abschlußplatten, die die endständigen Querschnittsöffnungen der Schlauchhülle überdecken, aufweist, oder daraus besteht. Zumindest eine der Abschlußplatten weist eine Füllöffnung mit einem Rückschlagventil auf, das für das Einfüllen der Lebensmittelmasse in die Schlauchhülle durchgängig ist bzw. in Offenstellung ist und gegen das Austreten von Lebensmittelmasse aus der Schlauchhülle sperrt bzw. in Sperrstellung ist.

Das Rückschlagventil kann zumindest eine an der Abschlußplatte geführte, z.B. angelenkte, Ventilklappe aufweisen, bevorzugt zumindest zwei Ventilklappen, die die Füllöffnung vollständig überdecken. Die zumindest eine Ventilklappe kann dadurch als Rückschlagventil ausgebildet sein, dass sie auf einem Abschnitt der ersten Fläche einer Abschlußplatte aufliegt und/oder einen Ansatz aufweist, der die Ventilklappe in Sperrstellung gegen die Wand der Füllöffnung abstützt. Alternativ kann das Rückschlagventil von zumindest einer elastischen Ventilklappe gebildet sein, die die Füllöffnung überdeckt und unter dem Druck des Füllens zumindest einen Durchlass bildet.

Bevorzugt bildet das Rückschlagventil in Sperrstellung mit der Abschlußplatte eine ebene erste Fläche, die dem Innenvolumen der Schlauchhülle zugewandt ist. Die dem Innenvolumen bzw. der ersten Fläche der Abschlußplatte gegenüberliegende zweite Fläche kann eine Ebene bilden, wobei optional die Abschlußplatte zwischen erster und zweiter Fläche Versteifungselemente für die erste Fläche aufweist. Optional kann jede Abschlußplatte ein Ansatzstück aufweisen, das die Abschlußplatte gegenüber ihrer ersten Fläche zulaufend abschließt, z.B. kegelförmig oder kalottenförmig die Abschlußplatte überdeckt.

Die Abschlußplatten können dadurch flüssigkeitsdicht an den Enden der Schlauchhülle angebracht sein, dass sie einstückig mit der Schlauchhülle ausgebildet sind oder die Schlauchhülle umfänglich die Abschlußplatten umfassen und mit diesen verklebt, verschweißt und/oder verklemmt sind, z.B. umfänglich mit den Abschlußplatten verklebt, verschweißt und/oder verklemmt sind.

Jede Abschlußplatte kann mittels eines Klemmrings, der die Schlauchhülle z.B. umfänglich gegen die Abschlußplatte oder in eine umfängliche Nut der Abschlußplatte drückt, mit der Schlauchhülle verklemmt sein.

Die Schlauchhülle ist bevorzugt elastisch, so dass sie beim Füllen durch die Lebensmittelmasse gedehnt werden kann und nach Beendigung des Füllens, z.B. durch Entfernen eines Füllrohrs, die eingefüllte Lebensmittelmasse in Richtung auf die Füllöffnung drückt.

Die Abschlußplatte der Lebensmittelhülle bildet durch ihre erste Fläche, die dem Innenvolumen der Schlauchhülle zugewandt ist, eine passende Oberfläche der daran angrenzenden Lebensmittelmasse aus, die eben ist und daher das Anlegen oder Eingreifen eines Greifers nach Entfernen der Abschlußplatte, bevorzugt der Lebensmittelhülle, ohne weitere Bearbeitung erlaubt, insbesondere ohne Abschneiden eines endständigen Abschnitts des Lebensmittels. Diese Oberfläche ist zumindest im Bereich der Abschlußplatte, bevorzugt im Bereich der Abschlußplatte einschließlich des Bereichs des Rückschlagventils, eben. Des Weiteren erlaubt die Oberfläche des Lebensmittels, die an einer Abschlußplatte angrenzte, nach Entfernen der Abschlußplatte, bevorzugt der Lebensmittelhülle, das Schneiden in Scheiben mit gleichem Querschnitt bis in einen kurzen Abstand vor einem an der Oberfläche anliegenden Greifer.

Bevorzugt weist das Verfahren zur Herstellung nach dem Entfernen der Abschlußplatte, bevorzugt der Lebensmittelhülle, den Schritt des Schneidens des Lebensmittels in Scheiben parallel zu einer Abschlußplatte auf, insbesondere parallel zur ersten Fläche der Abschlußplatte.

Bevorzugt sind die Abschlußplatten mit ihren ersten Flächen parallel zueinander an der Schlauchhülle angebracht, um das darin geformte Lebensmittel parallel zu den ersten Flächen der Abschlußplatten in Scheiben schneiden zu können.

Die Abschlußplatten können in einem Winkel von 30° bis 90°, z.B. 45° bis 75°, bevorzugt senkrecht, zur Längsachse der Schlauchhülle angeordnet sein. Abschlußplatten, die senkrecht zur Längsachse der Schlauchhülle an dieser angebracht sind, sind bevorzugt kreisförmig. Bei Anordnung der Abschlußplatten in einem Winkel kleiner als 90° zur Längsachse der Schlauchhülle sind die Abschlußplatten bevorzugt oval, um gleich dem in dem Winkel geschnittenen Querschnitt der Schlauchhülle zu sein.

Generell ist bevorzugt, dass die Schlauchhülle vor dem Füllen gerafft ist und weiter bevorzugt zusätzlich vakuumiert, so dass die leere Lebensmittelhülle stabil zwischen den Abschlußplatten gehalten wird und einfach handhabbar ist, z.B. zum Anordnen an einem Füller. Insbesondere wenn die Lebensmittelhülle vakuumiert ist, kann die Füllöffnung von einem elastischen Material überdeckt sein, z.B. von einem Diaphragma, das vor dem Füllen durch ein Füllrohr eines Füllers durchstochen werden kann. Optional kann ein Abstand zwischen einem Rückschlagventil und der anderen Abschlußplatte sein, weiter optional kann ein Abstandshalter zwischen den Abschlußplatten angeordnet sein, um ein Öffnen von Rückschlagventilen beim Befüllen zu erleichtern.

Die Abschlußplatten können aus lebensmittelgeeignetem Kunststoff oder aus Stahl sein. Das Verfahren kann den Schritt aufweisen, nach dem Entfernen der Abschlußplatten oder der vollständigen Lebensmittelhülle von einem Lebensmittel, z.B. vor dem Schneiden, die Abschlußplatten jeweils endständig an einer neuen Schlauchhülle anzubringen, bevorzugt nach Reinigen der Abschlußplatten, um eine neue Lebensmittelhülle zu bilden. Dabei ist bevorzugt, die Abschlußplatten mit der neuen Schlauchhülle zu verklemmen. In dieser Ausführungsform ist bevorzugt, dass die Abschlußplatten gleich ausgebildet sind, so dass die Abschlußplatten ohne Unterscheidung endständig an der Schlauchhülle angebracht werden können.

Optional können die Abschlußplatten Durchbrechungen aufweisen, die gasdurchlässig sind und für die eingefüllte Lebensmittelmasse undurchlässig sind, z.B. bei dem Fülldruck von Lebensmittelmasse verstopft werden. Solche Durchbrechungen können in der ersten Fläche z.B. eine Breite von maximal 0,5 mm, z.B. 0,01 mm bis 0,3 mm und/oder einen Querschnitt von 0,01 mm² bis 1 mm², bevorzugt 0,003 bis 0,25 mm² aufweisen und optional eine Länge durch die Abschlußplatte von 0,1 mm bis 15 mm haben, optional mit konstantem oder sich verjüngendem Querschnitt. Alternativ oder zusätzlich können Durchbrechungen der Lebensmittelhülle dadurch ausgebildet sein, dass zumindest eine Abschlußplatte, bevorzugt beide Abschlußplatten, angrenzend an die Schlauchhülle, z.B. umfänglich, Ausnehmungen aufweisen, die von der Schlauchhülle entlang des Umfangs der Abschlußplatte überdeckt werden aber innerhalb des Umfangs der Abschlußplatte nicht verschlossen werden. Solche Ausnehmungen können z.B. radial am Umfang einer Abschlußplatte angeordnet sein. Ausnehmungen können z.B. schlitzförmig und zum Umfang einer Abschlußplatte offen sein, z.B. bis zum Umfang einer Abschlußplatte eine Breite von maximal 0,5 mm, z.B. 0,1 mm bis 0,3 mm und/oder einen Querschnitt von 0,1 mm² bis 1 mm², bevorzugt 0,003 bis 0,25 mm² aufweisen. Zum Umfang einer Abschlußplatte offene Ausnehmungen haben gegenüber Durchbrechungen den Vorteil, dass sie eine einfachere Reinigung ermöglichen.

An zumindest einer Abschlußplatte kann eine Öse angebracht sein, um daran die in die Lebensmittelhülle eingefüllte Lebensmittelmasse aufzuhängen.

Bevorzugt weist die Schlauchhülle einen längs verlaufenden Aufreißfaden auf, der gradlinig oder spiralförmig zur Längsachse der Schlauchhülle angebracht sein kann.

Optional weist zumindest eine Abschlußplatte einen optisch erkennbaren Code und/oder einen beschreibbaren elektronischen Speicher, vorzugsweise gekoppelt mit zumindest einem Sensor, und/oder einen elektronisch auslesbaren Speicher für einen gespeicherten Code und/oder für Sensordaten auf. Der elektronische Speicher kann z.B. ein RFID-Speicher sein. Der Sensor ist z.B. ein Temperatursensor, Leitfähigkeitssensor mit Kontakten in der ersten Fläche, oder ein pH-Sensor. In eine Abschlußplatte kann auch ein chemischer oder biochemischer Sensor, z.B. ein Indikator eingelassen sein, z.B. als Sensor für den Zustand des Lebensmittels, z.B. für den Reifungsgrad oder die Temperatur.

Optional können die Abschlußplatten Kontakte für die Stromzuführung aufweisen, die in der ersten Fläche liegen, um die Lebensmittelmasse mit Strom zu beaufschlagen, z.B. zur Erzeugung von gepulsten elektrischen Feldern und/oder zur Erwärmung.

Optional kann die gefüllte Lebensmittelhülle zur Haltbarmachung hochdruckbehandelt werden, z.B. für zumindest 3 oder zumindest 5 min, z.B. für 3 bis 10 min, bei einem Überdruck von zumindest 1000 bar, bevorzugt bis 12 000 bar, bevorzugter 6000 bis 8000 bar. Für eine solche statische Hochdruckbehandlung geeignete Geräte sind unter anderem von NC-Hyperbaric, Spanien, erhältlich, die als Druckmedium z.B. Wasser verwenden.

Das Verfahren weist die Schritte
- Anordnen der Lebensmittelhülle mit der Füllöffnung der Abschlußplatte angrenzend an oder über ein Füllrohr,
- Einfüllen einer Lebensmittelmasse in die Schlauchhülle durch das Füllrohr bis die Lebensmittelhülle gefüllt ist, insbesondere bis zum Erreichen eines vorbestimmten Drucks oder eines vorbestimmten Volumens, das eingefüllt wurde oder das die Lebensmittelhülle einnimmt, und Beenden des Füllens,
- wobei optional während des Füllens Gas aus der Lebensmittelhülle durch Durchbrechungen zumindest einer der Abschlußplatten entweicht,
- Entfernen der Abschlußplatte von dem Füllrohr, wobei die Lebensmittelmasse das Rückschlagventil schließt, z.B. die zumindest eine Ventilklappe angrenzend an die Füllöffnung schiebt,
- optional Inkubieren der gefüllten Lebensmittelhülle, z.B. zum Reifen und/oder Garen der Lebensmittelmasse in der Lebensmittelhülle,
- bevorzugt Entfernen der Abschlußplatten oder der vollständigen Lebensmittelhülle von dem Lebensmittel, z.B. durch Ziehen eines an der Schlauchhülle verlaufenden Aufreißfadens, und
- bevorzugt Schneiden des Lebensmittels in Scheiben, insbesondere Schneiden parallel zu der Fläche des Lebensmittels, die an einer Abschlußplatte anlag,
- optional Reinigen und Befestigen der Abschlußplatten an einer neuen Schlauchhülle für das erneute Füllen,
auf oder besteht daraus.

Optional kann die Lebensmittelhülle nach dem Füllen, insbesondere während einer anschließenden Kühlphase, um ihre Längsachse oder senkrecht zu ihrer Längsachse bewegt werden, z.B. gedreht werden, um eine Verteilung von Inhaltsstoffen der Lebensmittelmasse zu erzielen, die sich ohne Bewegung während einer Kühlphase absetzen. Dies betrifft z.B. Lebensmittelmassen, die während des Füllens eine Flüssigphase aufweisen, die während einer Kühlphase erstarrt, insbesondere Gelee, Aspik oder andere Flüssigphasen mit einer anderen Dichte als darin enthaltene stückige Lebensmittelbestandteile.

Das Verfahren weist keinen Schritt des Anbringens eines Verschlusses an der Lebensmittelhülle auf, z.B. kein Anbringen eines Clips, einer Verschnürung oder einer Verschlussnaht. Erfindungsgemäß besteht das Verschließen der Lebensmittelhülle nach dem Füllen aus dem Verschließen der Füllöffnung durch das Rückschlagventil.

Im Verfahren kann das Füllrohr eine senkrecht zur Längsachse angebrachte oder ein angeschrägte Mündung aufweisen.

Die erfindungsgemäße Lebensmittelhülle kann dadurch an einem Füller angeordnet werden, dass sie durch ein automatisches Zuführsystem aus einem Vorrat an den Füller positioniert wird. Das Zuführsystem, das z.B. ein Revolversystem sein kann, ist z.B. eingerichtet, jeweils eine Lebensmittelhülle an den Füller zu liefern und mit der Füllöffnung an dessen Füllrohr anzuordnen, wenn die vorhergehende Lebensmittelhülle gefüllt und vom Füller entfernt worden ist. Dabei hat die Lebensmittelhülle den Vorteil, dass sie vollständig vorfabriziert werden kann und dass sie ohne weiteres unmittelbar mit Lebensmittelmasse befüllt werden kann, indem diese Masse durch ein Füllrohr in die Füllöffnung gedrückt wird und sich die Füllöffnung nach Entfernen von dem Füllrohr mittels des Rückschlagventils selbsttätig schließt. Durch das selbsttätige Schließen des Rückschlagventils wird Verlust an Lebensmittelmasse vermieden, der z.B. durch Austreten von Masse aus einem offenen Hüllenende auftreten würde.

Optional können die dem Innenvolumen der Schlauchhülle zugewandten Oberflächen der Rückschlagventile, die in gegenüberliegenden Abschlußplatten angeordnet sind, bei geraffter Schlauchhülle, die bevorzugt vakuumiert ist, gegeneinander anliegen, z.B. um die Füllöffnungen zu überdecken und das Vakuum zu halten. Bei einem Rückschlagventil in nur einer Abschlußplatte kann optional die dem Innenvolumen der Schlauchhülle zugewandte Oberfläche des Rückschlagventils gegen die gegenüberliegende Abschlußplatte anliegen. Dabei überdecken die Abschlußplatten bevorzugt einen größeren Anteil der Querschnittsfläche der Schlauchhülle als jedes Rückschlagventil. Bevorzugt ragen die Rückschlagventile in dieser Ausführungsform über die dem Innenvolumen zugewandte erste Fläche einer Abschlußplatte oder sind mit dieser ersten Fläche bündig.

Alternativ kann die Füllöffnung in Ausführungsformen, in denen die Lebensmittelhülle gerafft und vakuumiert ist, dadurch zum Halten des Vakuums verschlossen sein, dass die Kante der Füllöffnung, die an das Rückschlagventil angrenzt, umlaufend dicht und lösbar mit dem Rückschlagventil verbunden ist. Dabei ist diese umlaufende Verbindung z.B. dadurch lösbar, dass vor dem Füllen das Füllrohr diese Verbindung trennt.

Die Erfindung wird nun genauer mit Bezug auf die Figuren beschrieben, die schematisch in
- Figur 1 eine erfindungsgemäße Lebensmittelhülle während des Füllens,
- Figur 2 eine weitere erfindungsgemäße Lebensmittelhülle und in
- Figur 3 eine weitere erfindungsgemäße Lebensmittelhülle während des Füllens zeigen. In den Figuren bezeichnen gleiche Bezugsziffern funktionsgleiche Elemente. In den Figuren weisen beide Abschlußplatten 2, 3 entsprechend einer Ausführungsform Rückschlagventile 8 auf.

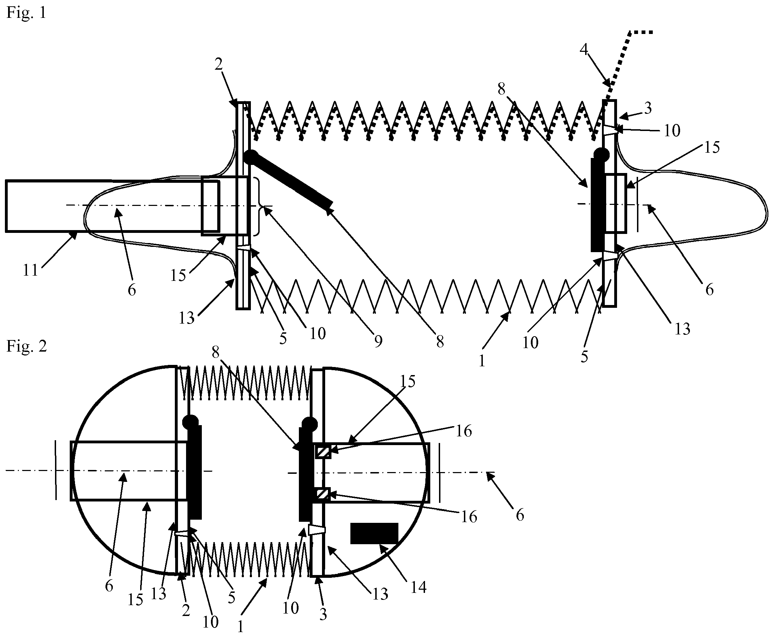

Die Figur 1 zeigt eine Lebensmittelhülle aus einer Schlauchhülle 1, deren endständige Querschnittsöffnungen von Abschlußplatten 2, 3 verschlossen sind, wobei die Schlauchhülle 1 einen längs verlaufenden Aufreißfaden 4 aufweist. Die Abschlußplatten 2, 3 sind mit ihren ersten Flächen 5, die dem Innenvolumen der Lebensmittelhülle zugewandt sind, senkrecht zur Längsachse 6 der Schlauchhülle 1 angeordnet. Die Abschlußplatten 2, 3 weisen jeweils eine Öse 7 auf, an der die Lebensmittelhülle nach dem Füllen aufgehängt werden kann.

Jede Abschlußplatte 2, 3 weist ein Rückschlagventil 8 auf, das die Füllöffnung 9 überdeckt und als Rückschlagklappe ausgebildet ist, die an der Abschlußplatte 2, 3 angelenkt ist und in Sperrstellung gegen die erste Fläche 5 anschlägt, um beim Füllen in die Offenstellung in das Innenvolumen der Schlauchhülle 1 geschwenkt zu werden. Die Abschlußplatten 2, 3 weisen Durchbrechungen 10 auf, die für die eingefüllte Lebensmittelmasse undurchlässig sind oder durch die Lebensmittelmasse verstopft werden. Solche optionalen Durchbrechungen 10 dienen als Auslass für Gas, z.B. Luft, das in der Lebensmittelhülle enthalten ist.

Ein Füllrohr 11 liegt an der Füllöffnung 9 einer Abschlußplatte 3 an, um eine Lebensmittelmasse durch die Füllöffnung 9 in die Lebensmittelhülle zu drücken. In der hier gezeigten Ausführungsform liegt das Füllrohr 11 an einem Stutzen 15 an, der gegenüber der ersten Fläche 5 an der Abschlußplatte 2, 3 angebracht ist. Der Stutzen 15 kann einen kleineren Innendurchmesser als der Außendurchmesser des Füllrohrs 11 aufweisen, so dass das Füllrohr 11 nicht das Rückschlagventil 8 beschädigen kann.

Während dieses Füllens streckt sich die Schlauchhülle 1 aus ihrem anfänglichen Zustand, in dem sie bevorzugt gerafft ist. Während des Füllens kann in der Lebensmittelhülle enthaltenes Gas durch die Durchbrechungen 10 austreten.

Die Figur 2 zeigt eine Lebensmittelhülle, deren Abschlußplatten 2, 3 jeweils kalottenförmige Ansatzstücke 12 an der zweiten Fläche 13 gegenüber der ersten Fläche 5 aufweisen. Die Ansatzstücke 12 können massiv an die Abschlußplatte 2, 3 anschließen, z.B. einstückig oder angeklebt oder angeschweißt sein, bevorzugt sind die Ansatzstücke 12 schalenförmig.

In der hier gezeigten Ausführungsform weisen die Füllöffnungen 9 einen Durchmesser auf, der gleich oder größer als der Außendurchmesser des Füllrohrs 11 ist. In dieser Ausführungsform kann das Füllrohr 11 bis angrenzend an das Rückschlagventil 8 in die Füllöffnung 9 geschoben werden, so dass nach dem Abkoppeln des Füllrohrs 11 von der Abschlußplatte 2, 3 nur ein geringer Anteil an Lebensmittelmasse in der Abschlußplatte 2, 3 als Verlust zurückbleibt.

Bevorzugt weist das Füllrohr 11 und/oder die Abschlußplatte 2, 3 einen Anschlag 16 auf, der den Weg des Füllrohrs 11 in die Füllöffnung 9 begrenzt, z.B. bis das Füllrohr 11 direkt oder in einem geringen Abstand an dem Rückschlagventil 8 angeordnet ist, z.B. in einem geringen Abstand von 0,1 bis 2 mm.

Vor dem Füllen liegt die Schlauchhülle 1 bevorzugt gerafft zwischen ihren endständig angeordneten Abschlußplatten 2, 3 vor. In der hier gezeigten Ausführungsform weist die Schlauchhülle 1 keinen Aufreißfaden 4 auf.

An der Abschlußplatte 2, 3 kann ein Sensor 14 angebracht sein, der eingerichtet ist, die Temperatur, die elektrische Leitfähigkeit, den pH-Wert und/oder einen chemischen oder biochemischen Parameter der Lebensmittelmasse aufzunehmen.

Wie in Figur 2 gezeigt ist, kann an einer Abschlußplatte 2, 3, z.B. mittels eines Ansatzstücks 12 ein optisch erkennbarer Code und/oder ein beschreibbarer elektronischer Speicher 17 angebracht sein.

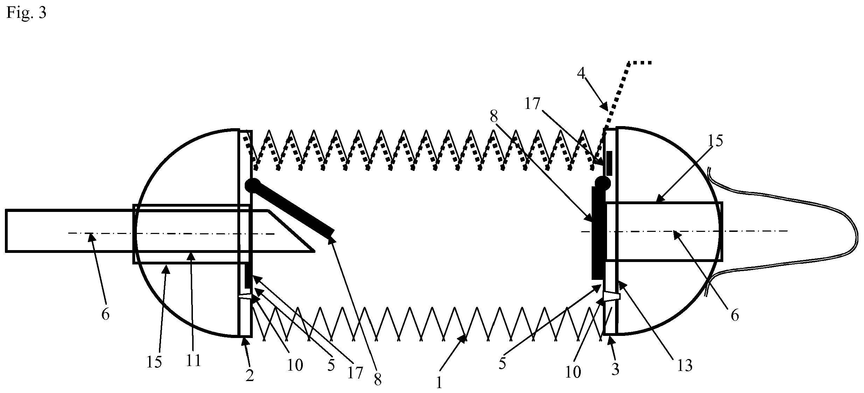

Die Figur 3 zeigt eine Lebensmittelhülle während des Füllens mit einem angeschrägten Füllrohr 11. Die Füllöffnung 9 hat einen Durchmesser gleich oder größer als der Außendurchmesser des Füllrohrs 11, so dass das Füllrohr 11 bis in das Innenvolumen der Schlauchhülle 1 vorgeschoben werden kann und an dem als Rückschlagklappe ausgebildeten Rückschlagventils 8 in Offenstellung anliegt. Für die Verwendung mit einem angeschrägten Füllrohr 11 ist bevorzugt, dass einerseits die Abschlußplatte 2, 3, insbesondere deren Füllöffnung 9 und/oder deren Stutzen 15 und/oder ein optionales Ansatzstück 12, und andererseits das Füllrohr 11 oder eine mit dem Füllrohr 11 verbundene Halterung für die Lebensmittelhülle jeweils zueinander passende asymmetrische Formen haben, die die Anordnung des Füllrohrs 11 an und durch die Füllöffnung 9 nur in einer Drehstellung relativ zur Abschlußplatte 2, 3 erlauben, um eine vorbestimmte Drehstellung des Füllrohrs 11 zum Rückschlagventil 8 einzustellen.

Für Ausführungsformen, in denen die Lebensmittelhülle gerafft und vakuumiert ist, können die Füllöffnungen z.B. durch ein elastisches Material überdeckt sein, das z.B. auf der zweiten Fläche 13 einer Abschlußplatte 2, 3 angeordnet ist oder das an dem Ende eines Stutzens 15 angeordnet ist, das gegenüber dem Rückschlagventil 8 liegt. Alternativ kann die Füllöffnung in Ausführungsformen, in denen die Lebensmittelhülle gerafft und vakuumiert ist, generell dadurch überdeckt sein, dass das Rückschlagventil lösbar mit der angrenzenden Kante der Füllöffnung verbunden ist, z.B. umlaufend dicht mit der Füllöffnung verbunden ist, z.B. durch eine Klebkante oder umlaufend an der Füllöffnung angeschweißt oder angeformt ist, so dass die um die Füllöffnung umlaufende Verbindung des Rückschlagventils mit der Füllöffnung durch den Eintritt eines Füllrohrs getrennt wird.

Weiter zeigt die Figur 3 elektrische Kontakte 17, die in jeder Abschlußplatte 2, 3 angeordnet sind, um elektrischen Strom in die Lebensmittelmasse einzuleiten.

### Bezugszeichenliste:

| | |
|---|---|
| 1 Schlauchhülle | 17 elektrischer Kontakt |
| 2 Abschlußplatte | |
| 3 Abschlußplatte | |
| 4 Aufreißfaden | |
| 5 erste Fläche | |
| 6 Längsachse | |
| 7 Öse | |
| 8 Rückschlagventil | |
| 9 Füllöffnung | |
| 10 Durchbrechung | |
| 11 Füllrohr | |
| 12 Ansatzstück | |
| 13 zweite Fläche | |
| 14 Sensor | |
| 15 Stutzen | |
| 16 Anschlag | |

## Patentansprüche

1. Lebensmittelhülle mit einer elastischen Schlauchhülle (1), wobei die endständigen Querschnittsöffnungen der Schlauchhülle (1) von jeweils einer Abschlußplatte (2, 3) verschlossen sind, deren dem Innenvolumen der Schlauchhülle (1) zugewandte Fläche (5) eben ist, **dadurch gekennzeichnet, dass** zumindest eine Abschlußplatte (2, 3) eine von einem Rückschlagventil (8) überdeckte Füllöffnung (9) aufweist.

2. Lebensmittelhülle nach Anspruch 1, **dadurch gekennzeichnet, dass** das Rückschlagventil (8) zumindest eine Rückschlagklappe aufweist, die an der Abschlußplatte (2, 3) angelenkt ist.

3. Lebensmittelhülle nach einem der voranstehenden Ansprüche, **dadurch gekennzeichnet, dass** das Rückschlagventil (8) bündig eine Ebene mit der dem Innenvolumen der Schlauchhülle (1) zugewandten Fläche (5) der Abschlußplatte (2, 3) bildet.

4. Lebensmittelhülle nach einem der voranstehenden Ansprüche, **dadurch gekennzeichnet, dass** die ersten Flächen (5) der Abschlußplatten (2, 3) zueinander parallel sind.

5. Lebensmittelhülle nach einem der voranstehenden Ansprüche, **dadurch gekennzeichnet, dass** die Abschlußplatten (2, 3) einen ovalen Querschnitt aufweisen und in einem Winkel von 20° bis kleiner 90° zur Längsachse (6) der Schlauchhülle (1) angeordnet sind.

6. Lebensmittelhülle nach einem der voranstehenden Ansprüche, **dadurch gekennzeichnet, dass** an zumindest einer Abschlußplatte (2, 3) ein Stutzen (15) zur Anlage oder Aufnahme eines Füllrohrs (11) angebracht ist.

7. Lebensmittelhülle nach einem der voranstehenden Ansprüche, **dadurch gekennzeichnet, dass** zumindest eine Abschlußplatte (2, 3) zumindest eine Durchbrechung (10) aufweist, die gasdurchlässig ist und für die eingefüllte Lebensmittelmasse undurchlässig und/oder bei dem Fülldruck von Lebensmittelmasse verstopft wird.

8. Lebensmittelhülle nach einem der voranstehenden Ansprüche, **dadurch gekennzeichnet, dass** sie gerafft und vakuumiert ist.

9. Lebensmittelhülle nach einem der voranstehenden Ansprüche, **dadurch gekennzeichnet, dass** sie vakuumiert ist und dass die Füllöffnung (9) einer Abschlußplatte (2) von einem elastischen Material überdeckt ist oder dass die Füllöffnung (9) dadurch verschlossen ist, dass das Rückschlagventil (8) gegen ein Rückschlagventil (8) der gegenüberliegenden Abschlußplatte (3) oder gegen die gegenüberliegende Abschlußplatte (3) anliegt oder dass die Füllöffnung (9) entlang ihrer Kante umlaufend dicht mit dem Rückschlagventil (8) verbunden ist.

10. Verfahren zur Herstellung eines Lebensmittels durch Füllen einer Schlauchhülle (1) mit einer Lebensmittelmasse, wobei die Schlauchhülle (1) an ihren endständigen Querschnittsöffnungen von jeweils einer Abschlußplatte (2, 3) verschlossen ist, deren dem Innenvolumen der Schlauchhülle (1) zugewandte erste Fläche (5) eben ist, wobei zumindest eine Abschlußplatte (2, 3) eine von einem Rückschlagventil (8) überdeckte Füllöffnung (9) aufweist, und dass ein Füllrohr (11) an oder in die Füllöffnung (9) bewegt wird und die Lebensmittelmasse durch das Füllrohr (11) gedrückt wird und anschließend das Füllrohr (11) von der Abschlußplatte (2, 3) wegbewegt wird und sich das Rückschlagventil (8) schließt.

11. Verfahren nach Anspruch 10, **dadurch gekennzeichnet, dass** zumindest eine Abschlußplatte (2, 3) zumindest eine Durchbrechung (10) aufweist, die gasdurchlässig ist und für die eingefüllte Lebensmittelmasse undurchlässig und/oder bei dem Fülldruck von Lebensmittelmasse verstopft wird und während des Füllens Gas durch die Durchbrechung (10) austritt.

12. Verfahren nach einem der Ansprüche 10 bis 11, **dadurch gekennzeichnet, dass** die gefüllte Schlauchhülle reifen gelassen, gekühlt und/oder gegart wird und anschließend die Abschlußplatten (2, 3) entfernt werden und das Lebensmittel parallel zu der Fläche des Lebensmittels, die an einer Abschlußplatte (2, 3) anlag, in Scheiben geschnitten wird.

13. Verfahren nach einem der Ansprüche 10 bis 12 **dadurch gekennzeichnet, dass** die gefüllte Schlauchhülle reifen gelassen, gekühlt und/oder gegart wird und anschließend die Abschlußplatten (2, 3) entfernt werden und ein Greifer direkt an die Oberfläche des Lebensmittels angeordnet wird, die an einer Abschlußplatte (2, 3) anlag.

14. Verfahren nach einem der Ansprüche 10 bis 13, **dadurch gekennzeichnet, dass** die gefüllte Schlauchhülle für zumindest 0,5 min bei einem Überdruck von zumindest 1000 bar, insbesondere bis 12 000 bar, bevorzugt 5000 bis 8000 bar, behandelt wird.

15. Verfahren nach einem der Ansprüche 10 bis 13, **dadurch gekennzeichnet, dass** die Schlauchhülle vor dem Füllen gerafft und vakuumiert ist und dass die Füllöffnung (9) vor dem Drücken von Lebensmittelmasse durch die Füllöffnung (9) durch das Füllrohr geöffnet wird, wobei die Füllöffnung von einem elastischen Material überdeckt ist, das vom Füllrohr durchstochen wird, oder dass die Füllöffnung (9) davon überdeckt ist, dass sie entlang ihrer Kante umlaufend dicht mit dem Rückschlagventil (8) verbunden ist und diese Verbindung vom Füllrohr getrennt wird, oder dass die Füllöffnung (9) davon überdeckt ist, dass das Rückschlagventil (8) gegen ein Rückschlagventil (8) der gegenüberliegenden Abschlußplatte (3) oder gegen die gegenüberliegende Abschlußplatte (3) anliegt.

## Claims

1. Casing for food having an elastic tube casing (1), wherein the terminal cross-sectional openings of the tube casing (1) are each closed by a closing plate, having flat faces facing the inner volume of the tube casing (1), **characterized in that** at least one closing plate (2, 3) has a filling opening (9) covered by a non-return valve (8).

2. Casing for food according to claim 1, **characterized in that** the non-return valve (8) has at least one non-return flap which is pivoted on the closing plate (2, 3).

3. Casing for food according to one of the preceding claims, **characterized in that** the non-return valve (8) forms a flush plane with the face (5) of the closing plate (2, 3) facing the inner volume of the tube casing (1).

4. Casing for food according to one of the preceding claims, **characterized in that** the first faces (5) of the closing plates (2, 3) are parallel to one another.

5. Casing for food according to one of the preceding claims, **characterized in that** the closing plates (2, 3) have an oval cross-section and are arranged in an angle of 20 ° to smaller than 90° to the longitudinal axis (6) of the tube casing (1).

6. Casing for food according to one of the preceding claims, **characterized in that** a connecting piece (15) is arranged on at least one closing plate (2, 3) for arranging or receiving a filling pipe (11).

7. Casing for food according to one of the preceding claims, **characterized in that** at least one closing plate (2, 3) has at least one through hole (10) which is permeable for gas and is impermeable for the food mass filled in and/or is blocked by the filling pressure of the food mass.

8. Casing for food according to one of the preceding claims, **characterized in that** it is heaped and vacuum-sealed.

9. Casing for food according to one of the preceding claims, **characterized in that** it is vacuum-sealed and that the filling opening (9) of a closing plate (2) is covered by an elastic material or that the filling opening (9) is closed by the non-return valve (8) lying against a non-return valve (8) of the opposite closing plate (3) or against the opposite closing plate (3) or that the filling opening (9) along its edge is circumferentially tightly connected to the non-return valve (8).

10. Process for producing a food by filling a tube casing (1) with a food mass, wherein the tube casing (1) at its terminal cross-sectional openings is closed by a closing plate (2, 3) each, the first face (5) of which facing the inner volume of the tube casing (1) is plane, wherein at least one closing plate (2, 3) has a filling opening (9) covered by a non-return valve (8) and that a filling pipe (11) is moved to or into the filling opening (9) and the food mass is pressed through the filling pipe (11) and subsequently the filling pipe (11) is removed from the closing plate (2, 3) and the non-return valve (8) closes.

11. Process according to claim 10, **characterized in that** at least one closing plate (2, 3) has at least one through hole (10) which is gas-permeable and is impermeable for the food mass filled in and/or is blocked by the filling pressure of the food mass, and that during the filling gas exits through the through hole (10).

12. Process according to one of claims 10 to 11, **characterized in that** the filled tube casing is ripened, cooled and/or cooked and subsequently the closing plates (2, 3) are removed and the food is cut into slices in parallel to the surface of the food which lay against a closing plate (2, 3).

13. Process according to one of claims 10 to 12, **characterized in that** the filled tube casing is ripened, cooled and/or cooked and subsequently the closing plates (2, 3) are removed and a gripper is arranged directly on the surface of the food which lay against a closing plate (2, 3).

14. Process according to one of claims 10 to 13, **characterized in that** the filled tube casing is treated for at least 0.5 min at an overpressure of at least 1,000 bar, especially up to 12,000 bar, preferably 5,000 to 8,000 bar.

15. Process according to one of claims 10 to 13, **characterized in that** prior to filling the tube casing is heaped and evacuated and that the filling opening (9) prior to pressing the food mass through the filling opening (9) is opened by the filling pipe, wherein the filling opening is covered by an elastic material which is holed by the filling pipe, or that the filling opening (9) is covered **in that** it is connected circumferentially along its edge tight to the non-return valve (8) and that this connection is separated by the filling pipe, or that the filling opening (9) is covered **in that** the non-return valve (8) lies against a non-return valve (8) of the opposite closing plate (3) or against the opposite closing plate (3).

## Revendications

1. Enveloppe alimentaire avec une enveloppe tubulaire élastique (1), dans laquelle les ouvertures terminales de section transversale de l'enveloppe tubulaire (1) sont fermées chacune par une plaque de fermeture (2, 3), dont la surface (5) tournée vers le volume intérieur de l'enveloppe tubulaire (1) est plane, **caractérisé en ce qu'**au moins une plaque de fermeture (2, 3) présente une ouverture de remplissage (9) qui est recouverte par un clapet anti-retour (8).

2. Enveloppe alimentaire selon la revendication 1, **caractérisée en ce que** le clapet anti-retour (8) présente au moins un clapet anti-retour articulé sur la plaque de fermeture (2, 3).

3. Enveloppe alimentaire selon l'une des revendications précédentes, **caractérisée en ce que** le clapet anti-retour (8) forme un plan affleurant avec la surface (5) de la plaque de fermeture (2, 3) tournée vers le volume intérieur de l'enveloppe tubulaire (1).

4. Enveloppe alimentaire selon l'une des revendications précédentes, **caractérisée en ce que** les premières surfaces (5) des plaques de fermeture (2, 3) sont parallèles les unes aux autres.

5. Enveloppe alimentaire selon l'une des revendications précédentes, **caractérisée en ce que** les plaques de fermeture (2, 3) ont une section transversale ovale et sont disposées selon un angle de 20° à moins de 90° par rapport à l'axe longitudinal (6) de l'enveloppe tubulaire (1).

6. Enveloppe alimentaire selon l'une des revendications précédentes, **caractérisée en ce qu'**un montant (15) pour l'installation ou la réception d'un tube de remplissage (11) est fixé à au moins une plaque de fermeture (2, 3).

7. Enveloppe alimentaire selon l'une des revendications précédentes, **caractérisée en ce qu'**au moins une plaque de fermeture (2, 3) présente au moins une perforation (10) perméable aux gaz et imperméable à la masse alimentaire remplie et/ou bloquée à la pression de remplissage de la masse alimentaire.

8. Enveloppe alimentaire selon l'une des revendications précédentes, **caractérisée en ce qu'**elle est tendue et mise sous vide.

9. Enveloppe alimentaire selon l'une des revendications précédentes, **caractérisée en ce qu'**elle est mise sous vide et **en ce que** l'ouverture de remplissage (9) d'une plaque de fermeture (2) est recouverte par un matériau élastique ou **en ce que** l'ouverture de remplissage (9) est refermée par le clapet anti-retour (8) reposant contre un clapet anti-retour (8) de la plaque de fermeture opposée (3) ou contre la plaque de fermeture opposée (3), ou **en ce que** l'ouverture de remplissage (9) est reliée le long de sa tranche et de manière étanche au clapet anti-retour (8).

10. Procédé de fabrication d'un produit alimentaire par remplissage d'une enveloppe tubulaire (1) avec une masse de produit alimentaire, l'enveloppe tubulaire (1) étant refermée à ses ouvertures terminales de section transversale par une plaque de fermeture (2, 3) respective, dont la première surface (5) tournée vers le volume intérieur de l'enveloppe tubulaire (1) est plate, **caractérisé en ce qu'**au moins une plaque de fermeture (2, 3) présente une ouverture de remplissage (9) qui est recouverte par un clapet anti-retour (8) et **en ce qu'**un tube de remplissage (11) est déplacé sur ou dans l'ouverture de remplissage (9) et la masse alimentaire est pressée à travers le tube de remplissage (11) et ensuite le tube de remplissage (11) est écarté de la plaque de fermeture (2, 3) et le clapet antiretour (8) se referme.

11. Procédé selon la revendication 10, **caractérisé en ce qu'**au moins une plaque de fermeture (2, 3) présente au moins une perforation (10) perméable aux gaz, imperméable à la masse alimentaire remplie et/ou bloquée à la pression de remplissage de la masse alimentaire, et le gaz s'échappe par la perforation (10) lors du remplissage.

12. Procédé selon l'une quelconque des revendications 10 ou 11, **caractérisé en ce que** l'enveloppe tubulaire remplie est laissée à maturation, refroidie et/ou cuite, puis les plaques de fermeture (2, 3) sont retirées et l'aliment parallèle à la surface de l'enveloppe de l'aliment, qui reposait contre une plaque de fermeture (2, 3), est découpé en tranches.

13. Procédé selon l'une des revendications 10 à 12, **caractérisé en ce qu'**on laisse mûrir, refroidir et/ou cuire l'enveloppe tubulaire remplie, puis on enlève les plaques d'extrémité (2, 3) et on dispose une pince directement sur la surface de l'aliment, sur laquelle surface repose la plaque de fermeture (2, 3).

14. Procédé selon l'une des revendications 10 à 13, **caractérisé en ce que** l'enveloppe tubulaire remplie est traitée pendant au moins 0,5 min à une surpression d'au moins 1000 bars, en particulier jusqu'à 12.000 bars, de préférence 5000 à 8.000 bars.

15. Procédé selon l'une quelconque des revendications 10 à 13, **caractérisé en ce que** l'enveloppe tubulaire est tendue et mise sous vide avant le remplissage et **en ce que** l'ouverture de remplissage (9) est ouverte à travers le tuyau de remplissage avant de presser la masse alimentaire à travers l'ouverture de remplissage (9), l'ouverture de remplissage étant recouverte d'un matériau élastique percé par le tube de remplissage, ou l'ouverture de remplissage (9) étant recouverte par celui-ci, étant reliée de manière étanche le long de sa tranche au clapet anti-retour (8) et ce raccordement étant séparé du tuyau de remplissage, ou bien l'ouverture de remplissage (9) étant recouverte par le fait que le clapet anti-retour (8) repose contre un clapet anti-retour (8) de la plaque de fermeture opposée (3) ou contre la plaque de fermeture opposée (3).
